(19) Europäisches Patentamt
European Patent Office
Office européen des brevets

(11) EP 2 642 853 B1

(12) **EUROPEAN PATENT SPECIFICATION**

(45) Date of publication and mention of the grant of the patent:
**08.06.2016 Bulletin 2016/23**

(21) Application number: **11808016.7**

(22) Date of filing: **25.11.2011**

(51) Int Cl.:
***A01N 37/38*** *(2006.01)* ***A01N 47/04*** *(2006.01)*
***A01N 43/54*** *(2006.01)* ***A01P 3/00*** *(2006.01)*

(86) International application number:
**PCT/PT2011/000039**

(87) International publication number:
**WO 2012/070961 (31.05.2012 Gazette 2012/22)**

(54) **FUNGICIDAL MIXTURE**

FUNGIZIDE MISCHUNG

MÉLANGE FONGICIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2010 PT 10105407**

(43) Date of publication of application:
**02.10.2013 Bulletin 2013/40**

(73) Proprietor: **SAPEC Agro, SA**
**P-1990-207 Lisboa (PT)**

(72) Inventors:
- **DUARTE, António Manuel Vasconcelos**
**P-1990-207 Lisboa (PT)**
- **NEVES, José Fernando Trindade Santos**
**P-2910-440 Setúbal (PT)**
- **ESTRELA, João Manuel Ribeiro Calçada**
**P-2910-440 Setúbal (PT)**

(74) Representative: **Weist, Stefan et al**
**Kraus & Weisert**
**Patentanwälte PartGmbB**
**Thomas-Wimmer-Ring 15**
**80539 München (DE)**

(56) References cited:
**EP-A1- 0 783 836** **EP-B1- 0 280 348**
**WO-A1-2010/092119** **WO-A2-2009/098228**
**WO-A2-2010/069763**

- **DATABASE WPI Week 200950 Thomson Scientific, London, GB; AN 2009-L62827 XP002676800, -& CN 101 473 830 A (KEER CHEM CO LTD) 8 July 2009 (2009-07-08)**
- **JEAN-LUC GENET ET AL: "Effect of dose rate and mixtures of fungicides on selection for QoI resistance in populations ofPlasmopara viticola", PEST MANAGEMENT SCIENCE, vol. 62, no. 2, 1 February 2006 (2006-02-01), pages 188-194, XP55028242, ISSN: 1526-498X, DOI: 10.1002/ps.1146**
- **SILVIA L TOFFOLATTI ET AL: "Assessment of QoI resistance inPlasmopara viticola oospores", PEST MANAGEMENT SCIENCE, vol. 63, no. 2, 1 February 2007 (2007-02-01), pages 194-201, XP55028385, ISSN: 1526-498X, DOI: 10.1002/ps.1327**
- **"Gebrauchsanleitung - Forum Star", , 1 December 2009 (2009-12-01), pages 1-9, XP55028399, Retrieved from the Internet: URL:http://www.agrar.basf.at/agroportal/at /media/migrated/at/product_files/labels_1/ GA_Forum_Star_1.pdf [retrieved on 2012-05-30]**
- **ULRICH GISI ET AL: "Fungicide modes of action and resistance in downy mildews", EUROPEAN JOURNAL OF PLANT PATHOLOGY, KLUWER ACADEMIC PUBLISHERS, DO, vol. 122, no. 1, 9 April 2008 (2008-04-09) , pages 157-167, XP019603338, ISSN: 1573-8469**
- **JEFFREY M STEIN ET AL: "Containment of existing potato late blight (Phytophthora infestans) foliar epidemics with fungicides", CROP PROTECTION, vol. 21, no. 7, 1 August 2002 (2002-08-01) , pages 575-582, XP55028413, ISSN: 0261-2194, DOI: 10.1016/S0261-2194(01)00147-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 642 853 B1

- **DATABASE WPI Week 201156 Thomson Scientific, London, GB; AN 2011-J88690 XP002676801, -& CN 102 113 511 A (HAINAN ZHENGYE ZHONGNONG HI TECH CO LTD) 6 July 2011 (2011-07-06)**
- **DATABASE WPI Week 201137 Thomson Scientific, London, GB; AN 2011-D04076 XP002676802, -& CN 101 953 356 A (UNIV SHANDONG AGRIC) 26 January 2011 (2011-01-26)**


Remarks:

The file contains technical information submitted after the application was filed and not included in this specification

## Description

### FIELD OF INVENTION

This invention relates to a fungicidal combination, comprising a phtalimide, a cinnamic acid derivative and a strobilurin, and the preparation and use of said composition for the control of fungi pathogens.

### BACKGROUND OF THE INVENTION

In the field of crop protection, the use of a particular active substance for the control of specific fungi may become increasingly difficult in time, as a result of the adaptation of the mentioned fungi to the fungicide being used. This leads to the loss of effectiveness in the control of the pathogen, and, consequently, downfall in crop production and profitability.

A very well known and widely used form of approaching this problem is by using a combination of different active substances presenting different mechanisms of action (EPPO Standards, Good plant protection practices, EPPO Bulletin 32, pages 367-369, 2002).

Many different compounds are known for use as systemic, contact or soil fungicides. Examples of such compounds, which are available commercially, can be found in "The Pesticide Manual", Eighth Edition, 1987, edited by Charles R. Worthing and S. Barrie Walker, and published by The British Crop Protection Council.

Compound (I), Dimethomorph [IUPAC: 4-[3-(4-chlorphenyl)-3-(3,4-dimethoxyphenyl)acryloyl]morpholine], whose structural formula is:

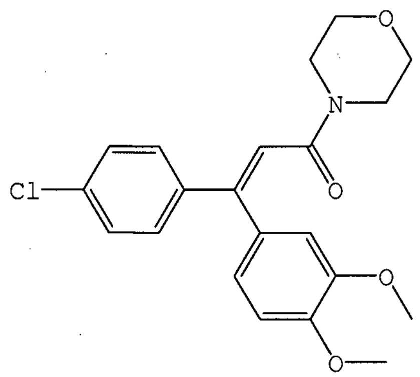

(I)

is a systemic fungicidal active substance (see "The Pesticide Manual" 14th. Edition (2006), The British Crop Protection Council, pages 347 f.). It was disclosed for the first time in European Patent EP 120321.

However, Dimethomorph shows relatively low systemic activity against oomycetes such as *Plasmopara spp* and *Phytophtora spp.* (WO 98/46607).

Compound (II), azoxystrobin [IUPAC: methyl (2*E*)-2-{2-[6-(2-cyanophenoxy)pyrimidin-4-yloxy]phenyl}-3-methoxyacrylate], disclosed in the European Patent EP 0382375, has the following structural formula:

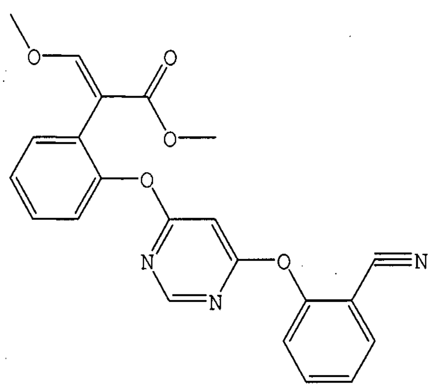

(II)

Azoxystrobin is a broad spectrum fungicide with protectant, curative, eradicant and systemic properties. It is used mostly to prevent spore germination and is commonly used as a protective treatment before or at the very early

stage of disease development.

Nevertheless, various species of plant pathogenic fungi and oomycetes have developed resistance to this class of fungicides (Plant Disease, Vol. 91, No. 11, November 2007, pp 1502-15115).

Compound of formula (III) is a well-known contact, protective leaf-fungicide. It was first described in patent US 2553770 and has the common name Folpet [IUPAC name: *N*-(trichloromethylthio)phthalimide].

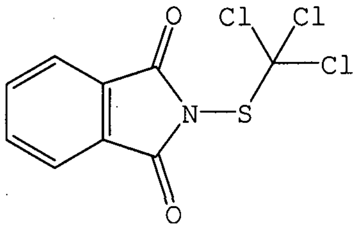

(III)

Although formulations containing contact fungicides are still commercially available, they are not taken up into the plant tissue, and only protect the plant where the spray is deposited. Since large amounts of active substance per hectare are required, they are not the optimal solution to prevent or treat diseases caused by fungi.

References to the use of the above mentioned active ingredients in fungicide mixtures can be found in several patent documents:

European Patent EP 1319336 B1 relates to a process to produce suspension concentrates or water dispersible granules based on active ingredients with a melting point below 80 °C, as, for example, pyraclostrobin, triflosxystrobin or propiconazole, and to mixtures of one of these active ingredients with an extensive list of active substances that includes folpet, dimethomorph and azoxystrobin.

Patent application WO 2007/052256 A2 relates to a process for the production of water dispersible granules comprising at least one of an extensive list of active substances fungicides, insecticides and herbicides, which includes, among others, folpet, dimetomorph and azoxystrobin.

European Patent application EP 1028125 A1 discloses a fungicidal composition comprising a dipeptide compound with general formula

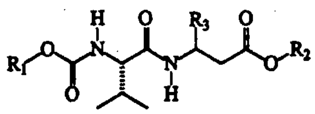

and one or more fungicides selected from a list of 40 active ingredients, which includes folpet, dimetomorph and azoxystrobin.

European Patent EP 1289366 B1 relates to active agent combination comprising (2E/Z)-2-(2-((6-(3-chloro-2-methylphenoxy)-5-fluoro-4-pyrimidinyl)-oxy)-phenyl)-2-(methoxyimino-N-methylethanamide of formula

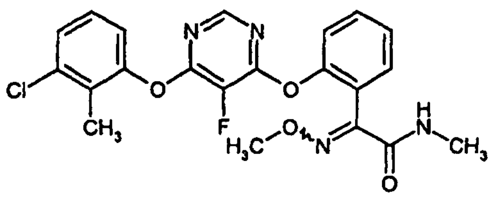

and one or more of a list of 82 fungicides including folpet, dimetomorph and azoxystrobin.

European Patent application EP 1326495 A1 relates to a mixture of phenylpyrroline ketoenol derivatives of general formula

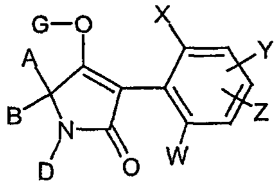

and one or more known fungicides and acaricides selected from a group comprising folpet, dimetomorph and azoxystrobin.

Patent application WO 03041728 A1 relates to a fungicidal composition comprising phenyl-propargylether derivatives of the general formula

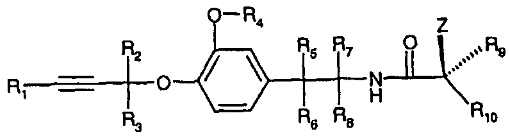

and one or more fungicides selected from a group comprising folpet, dimetomorph and azoxystrobin.

European Patent EP 0280348 B1 discloses combinations of fungicidal active ingredients, in particular mixtures of a cinnamic acid derivative and at least one systemic, contact or soil fungicide, chosen from a list comprising folpet. One of the formulations claimed in EP 0280348 B1 is a mixture comprising dimethomorph and Folpet, currently marketed under the trademark *Forum F*®. However, no reference is made to azoxystrobin.

CN101473830 discloses the combination of azoxystrobin and dimethomorph for the control of downy mildew and tobacco black shank, a synergistic control being shown for the later. WO2009/098228 A2 discloses a synergistic mixture of dimethomorph and azoxystrobin or trifloxystrobin. WO2010/069763 A2 discloses a synergistic mixture of either azoxystrobin or folpet in combination with another morpholine fungicide.

J.-L. Genet et al (Pesticide Management Science 2006, 62, 188-194) and S. L. Toffolatti et al(Pesticide Management Science 2007, 63, 194-201) report the addition of folpet to azoxystrobin to prevent resistance when combatting downy mildew in grapes.

A formulation comprising Azoxystrobin and Folpet (*Quadris Max*® from Syngenta) is also commercially available.

The above mentioned prior art references do not disclose the mixture of the above mentioned compounds I, II and III or the concentration ranges of the active ingredients in the mixture or application rates for an effective fungicidal action.

There is a need of agricultural formulations for a broader control over plant pathogenic fungi, in particular to resistant strains, with an application rate as low as possible, in order to obtain to an optimized toxicological and ecotoxicological behavior.

## SUMMARY OF THE INVENTION

The invention relates to a fungicidal composition comprising dimethomorph, azoxystrobin and folpet.

In an aspect of the invention, the concentration range of dimethomorph is from 1% to 20% by weight, the concentration range of azoxystrobin is from 1% to 20% by weight, and the concentration range of folpet is from 20% to 50% by weight.

In another aspect of the invention, the composition further comprises surfactants and/or carriers, the surfactants are selected from the group comprising dispersing agents, wetting agents and anti-foam agents.

In a preferred embodiment of the invention, the fungicidal composition comprises 8 % by weight of dimethomorph, 8% of azoxystrobin and 40% by weight of folpet.

The invention also relates to the use of said fungicidal composition to treat the plant diseases selected from the group comprising *Plasmopara* (Downy mildew) on grapevines, *uncinula* on grapevines and *phytophthora* on potatoes and tomatoes.

The invention further relates to a process to treat crops from pathogen fungi characterized by applying to said crops a mixture of dimethomorph, azoxystrobin and folpet.

In an aspect of the invention, the process is characterized by applying 0.05 kg/ha to 0.3 kg/ha of dimethomorph, 0.05 kg/ha to 0.3 kg/ha of azoxystrobin and 0.5 kg/ha to 1.5 kg/ha of folpet.

## DETAILED DESCRIPTION OF THE INVENTION

It is an objective of the present invention to provide a mixture of fungicidal active substances presenting high effectiveness in the control of fungi.

It was surprisingly found that by combining dimethomorph (compound I) with azoxystrobin (compound II) and folpet (compound III), a synergistic effect in the biological efficacy is observed, resulting in an unexpected increase in efficacy when compared to the efficacy of each of the active ingredients or with binary mixtures of the above mentioned active ingredients.

This synergistic effect that results in the broadening of control over pathogenic fungi is probably due to resistance breakdown as an effect of the combination of three active ingredients with different biological mechanisms of action: folpet is a contact phthalimide, dimethomorph is an inhibitor of cellular wall formation and azoxystrobin is an inhibitor of mitochondrial respiration.

The compositions according to the invention can be used in a preventive or curative form for controlling pathogens in useful plants, in particular phytopathogenic fungi in several crops.

Particularly, the compositions described in the invention are effective against plant pathogenic fungi belonging to the classes Ascomycota (*Uncinula*) and Oomyceta (*Phytophthora, peronospora, pseudoperonospora, albugo, bremia, plasmopara, pythium*).

According to the invention, useful plants are selected from the group comprising grape vines, potatoes, tomatoes and lettuce. The above group exemplifies the plants in which the present invention could be used upon.

The compositions according to the present invention are particularly useful for controlling the plant diseases selected from the group comprising *Plasmopara* on grapevines, *uncinula* on grapevines, *phytophthora* on potatoes and tomatoes.

Furthermore, the compositions according to the present invention delay the appearance and development of oomycete strains, particularly resistant to dimethomorph, especially *Plasmopara spp* and *Phytophtora spp* strains.

The concentrations of the three active substances used in the present invention are in the range of 1-20% for compound I, in the range of 1-20% for compound II, and in the range of 20-50% for compound III.

Accordingly, and depending on the desired effect, the application rates of the mixture according to the invention are from 0.05 to 0.3 kg/ha of compound I, from 0.05 to 0.3 kg/ha of compound II, and from 0.5 to 1.5 kg/ha of compound III.

When controlling the harmful fungi pathogenic to the various cultures mentioned, particularly in grapevine, the application of the mixture of the active ingredients I, II and III is carried out by spraying the plants after bud burst during each vegetative cycle.

The formulations are prepared in a known manner, for example, by mixing the active compounds with carriers and surfactants. The preparation of the formulations encompassed in the present invention is known in the art and use well-known additives.

In general, the formulations comprise from 22 to 90% by weight of the active substances. The active substances are employed in a purity of from 90% to 100%, preferably from 94% to 100%.

As an example, the formulation of a Wettable Powder (WP) is carried out using the following composition and procedure:

| | % w/w |
|---|---|
| Compound I | 8 |
| Compound II | 8 |
| Compound III | 40 |
| Alkylnaphtalenesulphonate salt | 3 |
| Lignossulphonate / condensed naphtalene sulfonate | 5 |
| Antifoam (Polyorganosiloxane) | 0.1 |
| Kaolin | up to 100 |

Compounds I, II and III, are mixed and subsequently milled in a jet mill, until a sufficiently fine particle size (about 95% of the particles under 10 $\mu$m) is obtained.

The previous mixture is added to the remaining constituents listed in the above table, and all components mixed in a suitable mixer (ex. Nautamix mixer).

The same active ingredients can be formulated as Water Dispersible granules (WG), using the following composition and procedure:

| | % w/w |
|---|---|
| Compound I | 8 |
| Compound II | 8 |
| Compound III | 40 |
| Alkylnaphtalenesulphonate salt | 3 |
| Lignossulphonate / condensed naphtalene sulfonate | 5 |
| Antifoam (Polyorganosiloxane) | 0.1 |
| Kaolin | up to 100 |

Compounds I, II and III, are mixed and subsequently milled in a jet mill, until a sufficiently fine particle size (about 95% of the particles under 10 $\mu$m) is obtained.

The previous mixture is added to the remaining constituents listed in the above table, and all components mixed in a suitable mixer (ex. Nautamix mixer).

Water (5-20% of the solids mass) is added to the previous mixture in order to form a homogeneous "paste", which is afterwards fed into a "basket" type extruder, where the material is forced through a perforated screen (0.8 mm to 1 mm diameter) by extrusion blades.

Moist granules from the extruder are fed into the Spheronizer, where a spinning plate promotes collisions of the granules against the equipment walls and against other granules, resulting in their plastic deformation, forming spheres.

The resulting product is dried with a stream of hot air in a fluidized bed drier.

The formulations obtained by the above procedures were submitted to stability tests for 14 days at 54 °C, and were shown to be stable, since analytical measurements demonstrated that there was no significant degradation of the active ingredients.

The association of the active ingredients according to the invention can be further presented, for example, in the form of directly sprayable suspensions or dispersions, emulsions, oil dispersions or dustable powders, to be applied by means of spraying, atomizing or dusting.

The fungicidal action of the mixture according to the invention can be demonstrated by the experiment below:

Fungicidal action

Grapevines of the variety Müller- Thurgau were cultivated in the greenhouse under standard conditions. Cuttings with one bud took roots in perlite and were potted into a soil mixture (Floraton 1) in pots of 9x9 cm.

Plants with at least five fully developed leaves were selected for the experimental procedure. Four to five fully developed leaves were picked from each plant, randomly distributed and treated or used as a control.

An isolate of *Plasmopara viticola* was used for the evaluation of the curative activity of the individual products for the control of the downy mildew.

For the production of spores, infected plants were incubated in the dark during the night, the newly generated sporangia harvested and put into distilled water. Concentration was determined with a Fuchs-Rosenthal counting chamber and adjusted to 50 000 spores/ml.

In order to test of the fungicidal activity of the products, the leaves were inoculated with *P. viticola.* Five leaves were selected, placed into *Petri* dishes with moist filter paper, with the lower side upward and inoculated with the above mentioned sporangia suspension.

Afterwards, during the night, an incubation in the dark under moist conditions (moist chamber) followed.

Next day, the inoculated leaves were dipped into the fungicide solutions contained in 100 ml in beaker glasses for complete wetting, afterwards dried under sterile conditions and again placed into the *Petri* dishes in a chamber thermostatically kept at a temperature of 21 °C and relative humidity higher than 90%.

The evaluation of the attack on leaves was carried out seven days after inoculation (expressed as attack on leaves, in percentage).

The fungicidal effect after one or two days from inoculation was analysed.

The trial was carried out (in duplicate) at "State Service Center Rhein Pfalz Breitenneg 71, Neustade", Germany.

Efficacy (E) was calculated using Abbott's formula:

$$E=(1-\alpha/\beta)x100$$

wherein $\alpha$ corresponds to the fungicidal infection of the treated leaves, in percentage, and $\beta$ corresponds to the fungicidal

infection of the untreated (control) leaves, in percentage.

An efficacy of 0 means that the infection level of the treated leaves corresponds to that of the untreated control leaves, and an efficacy of 100 means that treated leaves were not infected.

The expected efficacies of the mixture of the active ingredients are determined using Colby's formula and compared with the observed efficacies (Colby, S.R., "Calculating synergistic and antagonistic response of herbicide compositions", Weeds 15, pp 20-22, 1967)

$$EE = x + y - x \times y/100$$

wherein:

- EE is the expected efficacy, in percentage, when using the mixture of the active compounds A and B at the concentrations a and b.
- x is the efficacy, in percentage, when using active compound A at the concentration a;
- y is the efficacy, in percentage, when using active compound B at the concentration b;

If the observed efficacy (E) exceeds the expected (calculated) one (EE), the mixture presents synergistic effect.

The results from the assays were worked using the above formulas and are presented in Tables A and B.

TABLE A

| Curative efficacy on leaves inoculated with *Plasmopara viticola* | | | |
|---|---|---|---|
| | Active ingredient concentrations in the suspension, ppm | Efficacy (%) | |
| | | Observed | Expected |
| 1st day | | | |
| **II+III** | 100+500 | **26.5** | |
| **I** | 100 | **60.6** | |
| **I+II+III** | 100+100+500 | **81.8** | **71.0** |
| 2st day | | | |
| **II+III** | 100+500 | **34.3** | |
| **I** | 100 | **68.6** | |
| **I+II+III** | 100+100+500 | **84.6** | **79.4** |

TABLE B

| Curative efficacy on leaves inoculated with *Plasmopara viticola* | | | |
|---|---|---|---|
| | Active ingredient concentrations in the suspension, ppm | Efficacy (%) | |
| | | Observed | Expected |
| 1st day | | | |
| **I+III** | 100+500 | **78.9** | |
| **II** | 100 | **17.1** | |
| **I+II+III** | 100+100+500 | **90.9** | **82.5** |
| 2st day | | | |
| **I+III** | 100+500 | **69.7** | |
| **II** | 100 | **34.3** | |
| **I+ II+ III** | 100+100+500 | **84.6** | **80.1** |

When the leaves are treated with a suspension containing the mixture of three active ingredients according to the invention one day after the fungi inoculation, the observed efficacy is about 10% higher than the efficacy we would expect taking into account the results obtained by any of the binary mixtures and the remaining active substance.

When the treatment is carried out two days after the inoculation the observed efficacy is still 5% higher than the efficacy we would expect taking into account the results obtained by any of the binary mixtures and the remaining active substance.

The test results show that mixtures according to the invention present a synergistic effect, which results in an unexpected increase in efficacy against Downy mildew (*Plasmora viticola*).

## Claims

1. A fungicidal composition **characterized by** comprising dimethomorph, azoxystrobin and folpet.

2. The fungicidal composition according to claim 1, **characterized in that**:

   - the concentration range of dimethomorph is from 1% to 20% by weight;
   - the concentration range of azoxystrobin is from 1% to 20% by weight;
   - the concentration range of folpet is from 20% to 50% by weight.

3. The fungicidal composition according to claim 2, **characterized by** further comprising surfactants and/or carriers.

4. The fungicidal composition according to claim 3, **characterized in that** surfactants are selected from the group comprising dispersing agents, wetting agents and anti-foam agents.

5. The fungicidal composition according to claim 3, **characterized by** comprising 8% by weight of dimethomorph, 8% by weight of azoxystrobin and 40% by weight of folpet.

6. The fungicidal composition according to claim 1 **characterized in that** it is used to treat plant diseases selected from the group comprising *Plasmopara* (Downy mildew) on grapevines, *uncinula* on grapevines and *phytophthora* on potatoes and tomatoes.

7. A process to treat crops infected with pathogenic fungi **characterized by** applying a mixture of dimethomorph, azoxystrobin and folpet to said crops.

8. The process according to claim 7 **characterized by** applying 0.05 kg/ha to 0.3 kg/ha of dimethomorph, 0.05 kg/ha to 0.3 kg/ha of azoxystrobin and 0.5 kg/ha to 1.5 kg/ha of folpet.

## Patentansprüche

1. Fungizide Zusammensetzung, **dadurch gekennzeichnet, dass** diese Dimethomorph, Azoxystrobin und Folpet umfasst.

2. Fungizide Zusammensetzung gemäß Anspruch 1, **dadurch gekennzeichnet, dass**:

   - der Konzentrationsbereich von Dimethomorph 1 Gew.-% bis 20 Gew.-% beträgt;
   - der Konzentrationsbereich von Azoxystrobin 1 Gew.-% bis 20 Gew.-% beträgt;
   - der Konzentrationsbereich von Folpet 20 Gew.-% bis 50 Gew.-% beträgt;

3. Fungizide Zusammensetzung gemäß Anspruch 2, **dadurch gekennzeichnet, dass** diese ferner Tenside und/oder Trägersubstanzen umfasst.

4. Fungizide Zusammensetzung gemäß Anspruch 3, **dadurch gekennzeichnet, dass** die Tenside ausgewählt sind aus der Gruppe, umfassend Dispersionsmittel, Benetzungsmittel und Antischaummittel.

5. Fungizide Zusammensetzung gemäß Anspruch 3, **dadurch gekennzeichnet, dass** diese 8 Gew.-% Dimethomorph, 8 Gew.-% Azoxystrobin und 40 Gew.-% Folpet umfasst.

6. Fungizide Zusammensetzung gemäß Anspruch 1, **dadurch gekennzeichnet, dass** diese zum Behandeln von Pflanzenkrankheiten, ausgewählt aus der Gruppe, umfassend *Plasmopara* (falscher Mehltau) auf Weinstöcken, *Uncinula* auf Weinstöcken und *Phytophthora* auf Kartoffeln und Tomaten verwendet wird.

7. Verfahren zum Behandeln von Feldfrüchten, welche mit pathogenen Fungi infiziert sind, **dadurch gekennzeichnet, dass** eine Mischung von Dimethomorph, Azoxystrobin und Folpet auf die Feldfrüchte angewendet wird.

8. Verfahren gemäß Anspruch 7, **dadurch gekennzeichnet, dass** 0,05 kg/ha bis 0,3 kg/ha an Dimethomorph, 0,05 kg/ha bis 0,3 kg/ha an Azoxystrobin und 0,5 kg/ha bis 1,5 kg/ha an Folpet angewendet wird.

## Revendications

1. Composition fongicide **caractérisée en ce qu'**elle comprend du diméthomorphe, de l'azoxystrobine et du folpel.

2. Composition fongicide selon la revendication 1, **caractérisée en ce que** :

   - la plage de concentration du diméthomorphe est de 1 % à 20 % en poids ;
   - la plage de concentration de l'azoxystrobine est de 1 % à 20 % en poids ;
   - la plage de concentration du folpel est de 20 % à 50 % en poids.

3. Composition fongicide selon la revendication 2, **caractérisée en ce qu'**elle comprend en outre des surfactants et/ou des véhicules.

4. Composition fongicide selon la revendication 3, **caractérisée en ce que** les surfactants sont sélectionnés dans le groupe constitué des agents de dispersion, des agents mouillants et des agents antimousses.

5. Composition fongicide selon la revendication 3, **caractérisée en ce qu'**elle comprend 8 % en poids de diméthomorphe, 8 % en poids d'azoxystrobine et 40 % en poids de folpel.

6. Composition fongicide selon la revendication 1, **caractérisée en ce qu'**elle est utilisée pour traiter des maladies des végétaux sélectionnées dans le groupe comprenant le *Plasmopara* (ou mildiou) de la vigne, *l'uncinula* de la vigne et le *phytophthora* des pommes de terre et des tomates.

7. Procédé de traitement de cultures infectées par des champignons pathogènes **caractérisé par** l'application d'un mélange de diméthomorphe, d'azoxystrobine et de folpel auxdites cultures.

8. Procédé selon la revendication 7, **caractérisé par** l'application de 0,05 kg/ha à 0,3 kg/ha de diméthomorphe, de 0,05 kg/ha à 0,3 kg/ha d'azoxystrobine et de 0,05 kg/ha à 1,5 kg/ha de folpel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 120321 A
- WO 9846607 A
- EP 0382375 A
- US 2553770 A
- EP 1319336 B1
- WO 2007052256 A2
- EP 1028125 A1
- EP 1289366 B1
- EP 1326495 A1
- WO 03041728 A1
- EP 0280348 B1
- CN 101473830
- WO 2009098228 A2
- WO 2010069763 A2


### Non-patent literature cited in the description


- *EPPO Bulletin,* 2002, vol. 32, 367-369
- The Pesticide Manual. The British Crop Protection Council, 1987
- The Pesticide Manual. The British Crop Protection Council, 2006, 347 f
- *Plant Disease,* November 2007, vol. 91 (11), 1502-15115
- **J.-L. GENET et al.** *Pesticide Management Science,* 2006, vol. 62, 188-194
- **S. L. TOFFOLATTI et al.** *Pesticide Management Science,* 2007, vol. 63, 194-201
- **COLBY, S.R.** Calculating synergistic and antagonistic response of herbicide compositions. *Weeds,* 1967, vol. 15, 20-22